(19) Europäisches Patentamt / European Patent Office / Office européen des brevets

(11) **EP 3 089 321 A1**

(12) **EUROPEAN PATENT APPLICATION**
published in accordance with Art. 153(4) EPC

(43) Date of publication:
**02.11.2016 Bulletin 2016/44**

(51) Int Cl.:
**H02J 50/00** *(2016.01)*

(21) Application number: **13899146.8**

(22) Date of filing: **10.12.2013**

(86) International application number:
**PCT/JP2013/083134**

(87) International publication number:
**WO 2015/087400 (18.06.2015 Gazette 2015/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **The Chugoku Electric Power Co., Inc.**
**Hiroshima-shi, Hiroshima 730-8701 (JP)**

(72) Inventor: **OKIDAN, Kazuma**
**Hiroshima-shi, Hiroshima 730-8701 (JP)**

(74) Representative: **Osha Liang**
**2, rue de la Paix**
**75002 Paris (FR)**

(54) **POWER-TRANSMITTING DEVICE, POWER-FEEDING SYSTEM, AND DEVICE FOR ADJUSTING IMPEDANCE OF ELECTRICAL CIRCUIT**

(57)  The present invention is to solve a problem of damage to a power transmission circuit due to an increase in a supplied current by appropriately controlling transmission or cutoff of electric power from a power transmission device to a power receiving device. The power transmission device includes a power transmission circuit, a third coil 26, and a turning device. The power transmission circuit includes a second coil 24 being configured to supply a first coil 34 of a power receiving device with electric power. The third coil 26 is magnetically coupled with the second coil 24. The turning device causes the third coil 26 to turn about a turning shaft 262 that intersects with a winding shaft 241 of the second coil, to change an impedance of the power transmission circuit such that the electric power is cut off or supplied.

FIG. 1

**Description**

[TECHNICAL FIELD]

The present invention relates to a power transmission device, a power feeding system, and an impedance adjusting device of an electric circuit.

[BACKGROUND ART]

There is known a power feeding system that includes, for example, a power transmission device and a power receiving device (for example, PTL 1).

[CITATION LIST]

[Patent Literature]

[PTL 1] Japanese Patent Application Laid-open Publication No. 2013-70590

[Summary of Invention]

[Technical Problem]

For example, the power feeding system in Patent Literature 1 controls neither transmission nor cutoff of electric power from the power transmission device to the power receiving device. Accordingly, an increase in transmitted electric energy results in an increase in a current supplied to a power transmission circuit in the power transmission device, possibly causing damage to the power transmission circuit.

[Solution to Problem]

The present invention to solve the above-described problems is a power transmission device that includes a power transmission circuit, a third coil, and a turning device. The power transmission circuit includes a second coil. The second coil is configured to supply a first coil of a power receiving device with electric power. The third coil is magnetically coupled with the second coil. The turning device causes the third coil to turn about a turning shaft to change an impedance of the power transmission circuit such that the electric power is cut off or supplied. The turning shaft intersects with a winding shaft of the second coil.
Other features of the present invention will become apparent from descriptions of the accompanying drawings and of the present specification.

[Advantageous Effects of Invention]

According to the present invention, electric power supplied from a power transmission device to a power receiving device can be cut off or transmitted.

[Brief Description of Drawings]

[Fig. 1]

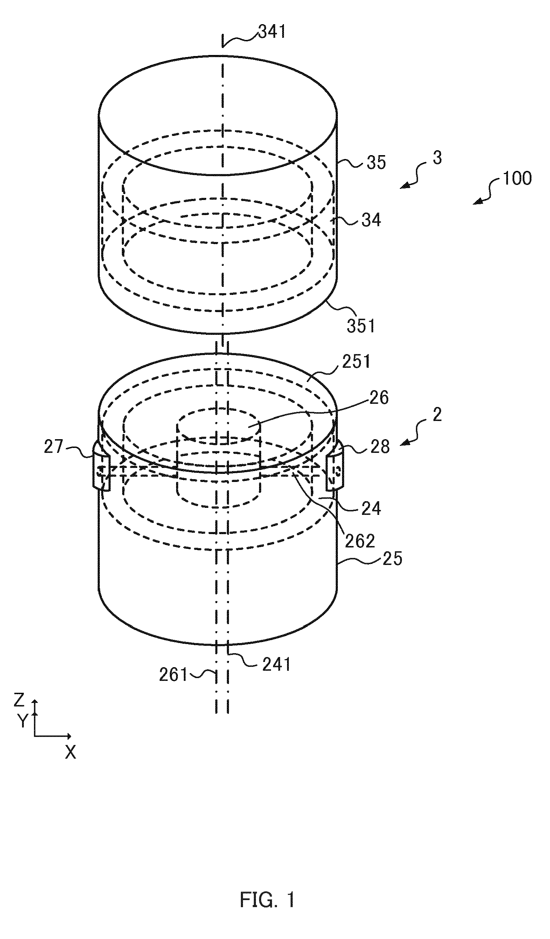

Fig. 1 is a perspective view illustrating a power feeding system of an embodiment of the present invention.
[Fig. 2]

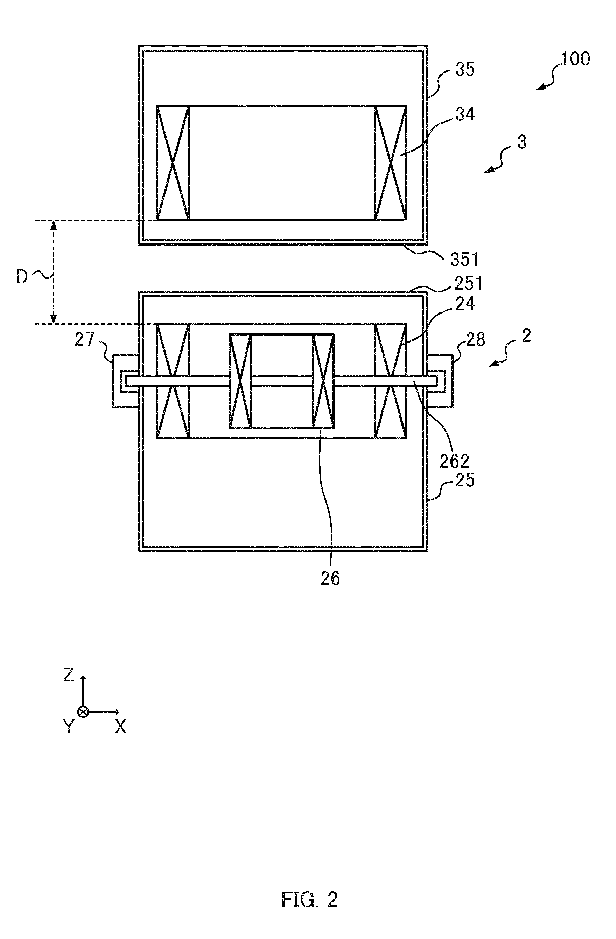

Fig. 2 is a cross-sectional view illustrating the power feeding system of the embodiment of the present invention.
[Fig. 3]

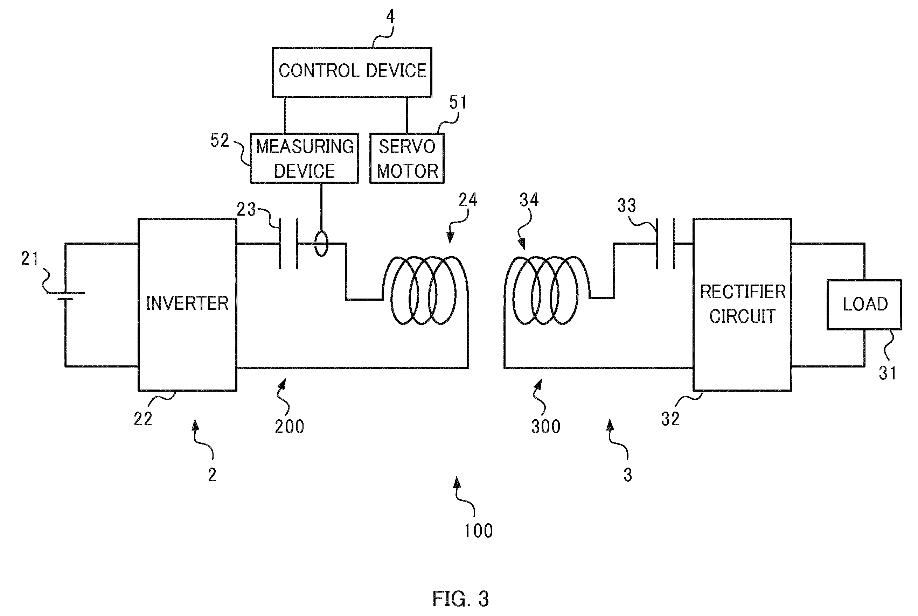

Fig. 3 is a drawing illustrating the power feeding system of the embodiment of the present invention.
[Fig. 4]

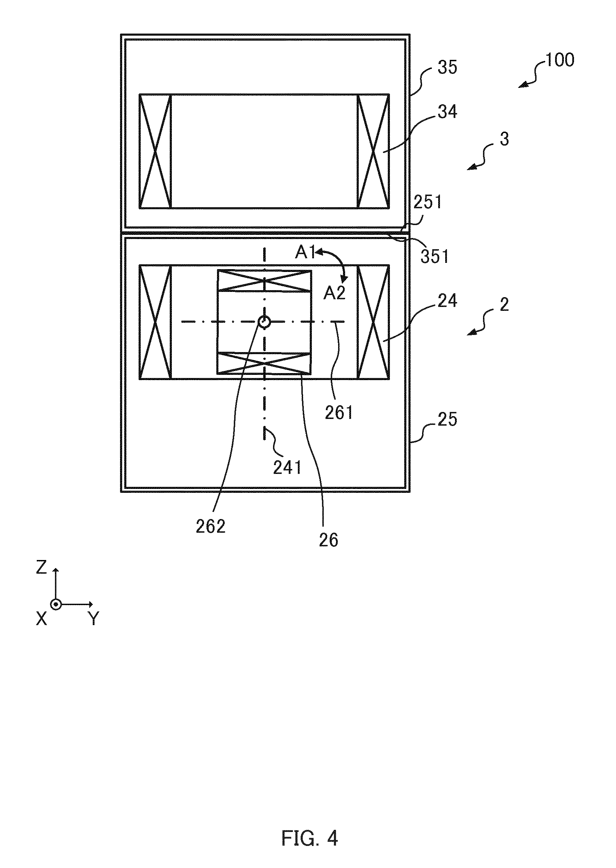

Fig. 4 is a cross-sectional view illustrating the power feeding system of the embodiment of the present invention having electric power transmitted.
[Fig. 5]

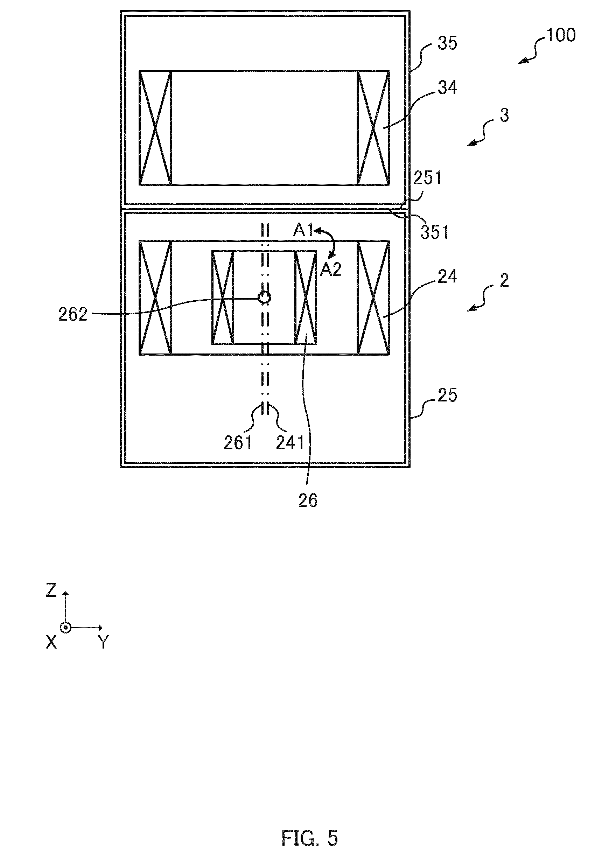

Fig. 5 is a cross-sectional view illustrating the power feeding system of the embodiment of the present invention having transmission of electric power cut off.

[Fig. 6]

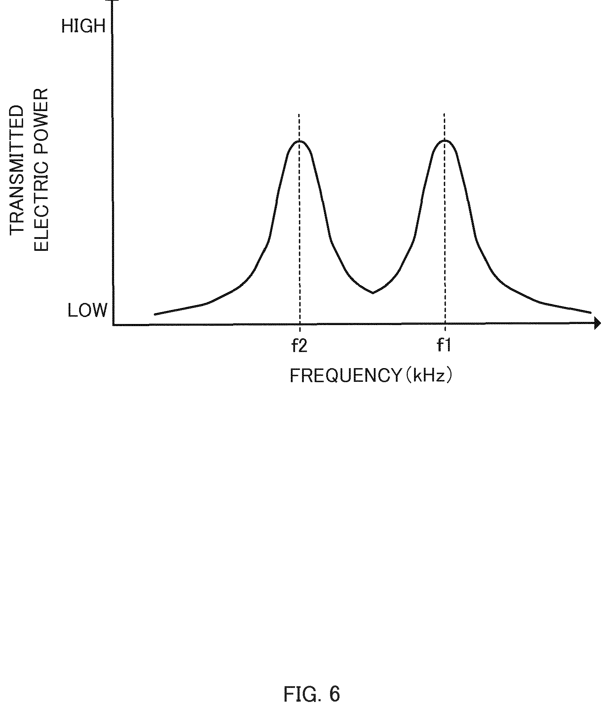

Fig. 6 is a drawing illustrating a relationship between a frequency and transmitted electric power of the embodiment of the present invention.

[Fig. 7]

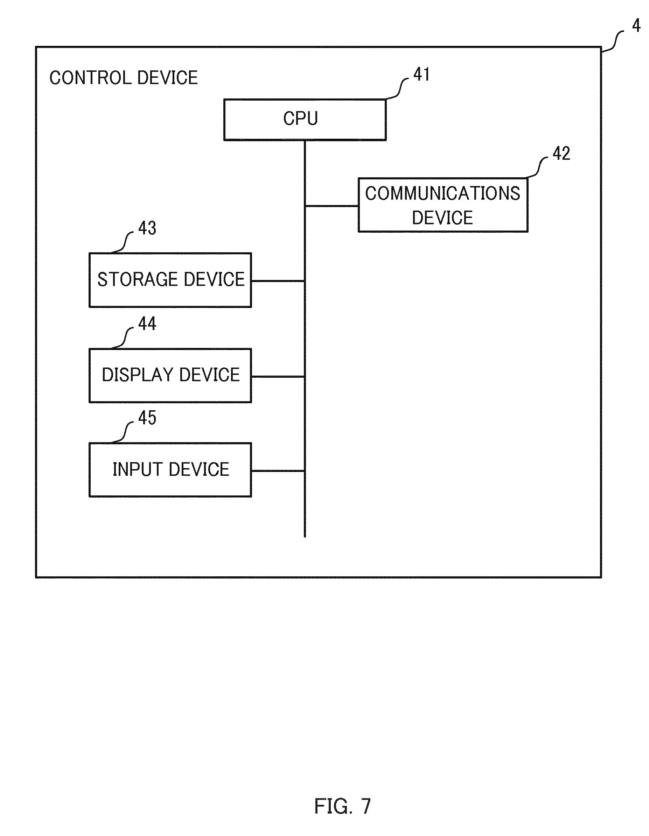

Fig. 7 is a drawing illustrating hardware of a control device of the embodiment of the present invention.

[Fig. 8]

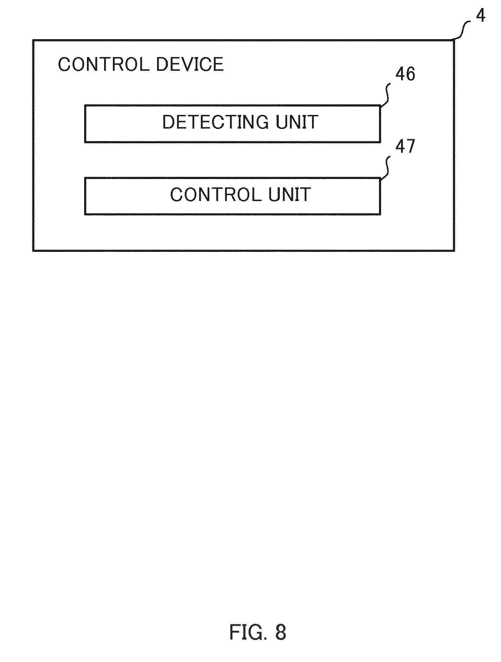

Fig. 8 is a drawing illustrating functions of the control device of the embodiment of the present invention.

[Description of Embodiments]

At least the following matters will become apparent from descriptions of the present specification and of the accompanying drawings.

===Power Feeding System===

The following describes the power feeding system of embodiments with reference to Fig. 1 to Fig. 3. Fig. 1 is a perspective view illustrating the power feeding system of the present embodiment. Although an inside of casings 25 and 35 cannot be seen, for convenience of explanation, the inside is indicated by dashed lines. Fig. 2 is a cross-sectional view illustrating the power feeding system of the present embodiment. Fig. 2 illustrates a cross section of a power feeding system 100 cut parallel to an X-Z plane along an approximately center of the power feeding system 100 in Fig. 1 and viewed toward +Y. Fig. 3 is a drawing illustrating the power feeding system of the present embodiment.

The power feeding system 100 is a system that performs wireless power transmission using, for example, a resonance phenomenon in an electromagnetic field. A Z-axis is an axis along winding shafts 241 and 341 and also along a vertical direction. A direction from the power transmission device 2 to the power receiving device 3 is defined as +Z while a direction from the power receiving device 3 to the power transmission device 2 is defined as -Z. An X-axis is an axis along a turning shaft 262. A direction from one end of the turning shaft 262 journaled to a bearing 27 to the other end of the turning shaft 262 journaled to a bearing 28 is defined as +X while a direction from the other end of the turning shaft 262 to the one end is defined as -X. A Y axis is an axis orthogonal to the X-axis and the Z-axis. A direction from the front surface of the paper to the back surface of the paper is defined as +Y while a direction from the back surface of the paper to the front surface of the paper is defined as -Y.

The power feeding system 100 includes a power transmission device 2 and a power receiving device 3.

The power transmission device 2 is a device that wirelessly transmits electric power to the power receiving device 3.

The power receiving device 3 is a device that receives electric power output from the power transmission device 2 and supplies electric power according to the received electric power to a load 31.

The load 31 is an electric power load such as an electrical device that operates based on the electric power supplied from the power receiving device 3.

=Power transmission device=

<Shape and Similar Specifications>

The power transmission device 2 includes a power transmission coil 24, the casing 25, a turning coil 26, the bearings 27 and 28, and the turning shaft 262.

The casing 25 houses a power transmission circuit 200 (an electric circuit), which includes the power transmission coil 24, the turning coil 26, and the turning shaft 262. The outer shape of the casing 25 has, for example, a columnar shape and is formed with, for example, an insulated material such as resin.

The power transmission coil 24 is tubularly wound around the winding shaft 241, which is along the vertical direction (the Z-axis). The turning coil 26 is disposed at the inside of the power transmission coil 24. For example, the power transmission coil 24 may be housed in an insulated case along the outer shape of the power transmission coil 24.

The turning coil 26 is a magnetic material magnetically coupled to the power transmission coil 24. A turning of the turning coil 26 changes an impedance of the power transmission circuit 200. The turning coil 26 is wound around a winding shaft 261, which is approximately orthogonal to the turning shaft 262. An outer diameter of the turning coil 26 is configured to be smaller than an inner diameter of the power transmission coil 24 so as to be disposed inside the power transmission coil 24. The turning coil 26 is secured to the turning shaft 261.

The turning shaft 261 continuously passing through, for example, the casing 25, the power transmission coil 24, and the turning coil 26 is journaled to the bearings 27 and 28 by both ends. Further, the turning shaft 262 is also approximately orthogonal to the winding shaft 241. Based on a rotary power transmitted from a servo motor 51, which is controlled by a control device 4, the turning shaft 261 turns clockwise (a direction A2 in Fig. 4) or anticlockwise (a direction A1 in Fig. 4) viewed from -X to +X. That is, the control device 4 turns the turning coil 26 in the A1 direction or the A2 direction around the turning shaft 262.

<Circuit>

The power transmission device 2 further includes a power supply 21, an inverter 22, a capacitor 23, the control device 4, the servo motor 51, and a measuring device 52. The turning coil 26, the control device 4, and the servo motor 51 correspond to an impedance adjusting device of the electric circuit.

The power supply 21 generates a DC power. The inverter 22 converts a DC power supplied from the power supply 21 into an AC power. The power transmission coil 24 is a primary side coil of the power feeding system 100 to wirelessly supply a power receiving coil 34 with electric power. The capacitor 23 is used to set the impedance of the power transmission circuit 200.

One end of the power supply 21 is coupled to one end of the capacitor 23 via the inverter 22. The other end of the power supply 21 is coupled to one end of the power transmission coil 24 via the inverter 22. The other end of the power transmission coil 24 is coupled to the other end of the capacitor 23. These couplings form the power transmission circuit 200 including the power supply 21, the inverter 22, the capacitor 23, and the power transmission coil 24.

The DC power output from the power supply 21 is converted from DC into AC by the inverter 22 and is supplied to the power transmission coil 24. The AC power supplied to the power transmission coil 24 is supplied from the power transmission coil 24 to the power receiving coil 34.

The measuring device 52 measures the current supplied to the power transmission coil 24 and transmits a cutoff signal to the control device 4. For example, when a current with a value larger than a predetermined value is measured, the measuring device 52 transmits the cutoff signal. The predetermined value is, for example, a value to the extent of not damaging the power transmission device 2. The predetermined value may be determined based on a specification or a similar condition of the power transmission device 2.

The servo motor 51 provides a rotary power to turning the turning shaft 262 to the turning shaft 262.

The control device 4 controls the servo motor 51.

The control device 4 turns the turning coil 26 to supply and cut off the electric power from the power transmission coil 24 to the power receiving coil 34, thus changing the impedance of the power transmission circuit 200. The control device 4 will be described later.

=Power Receiving Device=

<Shape and Similar Specifications>

The power receiving device 3 includes the power receiving coil 34 and the casing 35.

The casing 35 houses a power receiving circuit 300, which includes the power receiving coil 34. The outer shape of the casing 35 has, for example, a columnar shape and is formed with, for example, an insulated material such as resin.

The power receiving coil 34 is wound around the winding shaft 341, which is along the vertical direction (the Z-axis). The power receiving coil 34 is secured to a predetermined position close to the lower side (-Z) inside the casing 35.

<Circuit and Similar Components>

The power receiving device 3 further includes a rectifier circuit 32 and a capacitor 33.

The power receiving coil 34 is a secondary side coil of the power feeding system 100 to which electric power is wirelessly supplied from the power transmission coil 24. The rectifier circuit 32 converts an AC power supplied from the power receiving coil 34 into a DC power and supplies this converted DC power to the load 31. The capacitor 33 is used to set a value of an impedance of the power receiving circuit 300.

One end of the power receiving coil 34 is coupled to the load 31 via the capacitor 33 and the rectifier circuit 32. The other end of the power receiving coil 34 is coupled to the load 31 via the rectifier circuit 32. These couplings form the power receiving circuit 300 including the power receiving coil 34, the capacitor 33, the rectifier circuit 32, and the load 31.

===Settings of Power transmission device and Power Receiving Device===

The following describes the settings of the power transmission device and the power receiving device according to the present embodiment with reference to Fig. 2 and Fig. 4 to Fig. 6. Fig. 4 is a cross-sectional view illustrating the power feeding system of the present embodiment to which electric power is being transmitted. Fig. 5 is a cross-sectional view illustrating the power feeding system of the present embodiment to which transmission of electric power is being cut off. Fig. 4 and Fig. 5 illustrate a cross section of the power feeding system 100from cut parallel to a Y-Z plane along an approximately center of the power feeding system 100 in Fig. 1 and viewed toward -X. Fig. 6 is a drawing illustrating a relationship between a frequency and transmitted electric power of the present embodiment. The frequency in Fig. 6 indicates the frequency of the electric power output from the power transmission coil 24. The transmitted electric power indicates the electric power transmitted from the power transmission coil 24 to the power receiving coil 34. This transmitted electric power is, for example, determined based on transmission efficiency of the electric power from the power transmission coil 24 to the power receiving coil 34 and a similar specification.

<First Position and Second Position>

When the power transmission device 2 transmits electric power to the power receiving device 3, the power receiving device 3 is disposed at the first position. As illustrated in Fig. 4, the first position is a position where an opposed surface 351 of the power receiving device 3 and an opposed surface 251 of the power transmission device 2 are in contact.
When the power transmission device 2 does not transmit electric power to the power receiving device 3, the power receiving device 3 is disposed at a second position. As illustrated in Fig. 2, the second position is a position where the power receiving device 3 is away from the power transmission device 2 by a predetermined distance or more. The predetermined distance is configured based on a specification of the power feeding system 100 and a similar condition.

<Settings of Power transmission device and Power Receiving Device>

The power transmission device 2 and the power receiving device 3 are set based on the transmission efficiency. Setting of the power transmission device 2 and the power receiving device 3 include, for example, setting the frequency of the electric power transmitted from the power transmission device 2 and impedances of the power transmission circuit 200 and the power receiving circuit 300.
As described above, the transmission efficiency is determined based on a resonant frequency or a similar condition. These resonant frequencies f1 and f2 are, for example, determined based on Expression (1) to Expression (3).

[Value 1]

$$f_0 = \frac{1}{2\pi\sqrt{LC}} \quad \cdots \quad (1)$$

$$f_1 = \frac{f_0}{\sqrt{1-k}} \quad \cdots \quad (2)$$

$$f_2 = \frac{f_0}{\sqrt{1+k}} \quad \cdots \quad (3)$$

L indicates values of inductances of the power transmission circuit 200 and the power receiving circuit 300, and C indicates capacitance values of the power transmission circuit 200 and the power receiving circuit 300. *k* indicates a coupling coefficient between the power transmission coil 24 and the power receiving coil 34.
The value of the coupling coefficient *k* changes according to a transmission distance D (Fig. 2), which indicates a distance between the power transmission coil 24 and the power receiving coil 34. Alternatively, a unique resonant frequency $f_0$ varies according to the value of the inductance of the power transmission circuit 200. That is, the resonant

frequencies $f_1$ and $f_2$, namely, the transmission efficiency varies according to the transmission distance D and the value of the inductance of the power transmission circuit 200. Accordingly, varying the transmission distance D and the inductance of the power transmission circuit 200 ensures transmitting or cutting off electric power from the power transmission device 2 to the power receiving device 3.

The power transmission device 2 and the power receiving device 3 are set, for example, in a state where the power receiving device 3 is disposed at the first position. The power transmission device 2 and the power receiving device 3 are configured such that electric power is transmitted when a relative positional relationship between the power transmission coil 24 and the turning coil 26 is in a first positional relationship and electric power is not transmitted when the relative positional relationship between the power transmission coil 24 and the turning coil 26 is in a second positional relationship.

As illustrated in Fig. 4, the first positional relationship means the relative positional relationship between the power transmission coil 24 and the turning coil 26 when the winding shaft 241 and the winding shaft 261 are approximately orthogonal to one another. Alternatively, as illustrated in Fig. 5, the second positional relationship means the relative positional relationship between the power transmission coil 24 and the turning coil 26 when the winding shaft 241 and the winding shaft 261 are approximately parallel to one another.

Here, diameters and the numbers of windings of the power transmission coil 24 and the turning coil 26 and a similar specification are set such that the impedance of the power transmission circuit 200 is changed to the extent that electric power is transmitted or cut off when the relative positional relationship between the power transmission coil 24 and the turning coil 26 is in the first and the second positional relationships. For example, the diameters and the numbers of windings of the power transmission coil 24 and the turning coil 26 may be configured such that the value of the inductance of the power transmission circuit 200 when the power transmission coil 24 and the turning coil 26 are in the second positional relationship becomes twice or more of the value of the inductance of the power transmission circuit 200 when the power transmission coil 24 and the turning coil 26 are in the first positional relationship.

===Control device===

The following describes the control device according to the present embodiment with reference to Fig. 7 and Fig. 8. Fig. 7 is a drawing illustrating hardware of the control device of the present embodiment. Fig. 8 is a drawing illustrating functions of the control device of the present embodiment.

The control device 4 includes a Central Processing Unit (CPU) 41, a communications device 42, a storage device 43, a display device 44, and an input device 45. The CPU 41 executes a program stored in the storage device 43 to achieve various functions of the control device 4 and to integrally control the control device 4. The storage device 43 stores the above-described programs and various pieces of information. The display device 44 is a display to display information on the control device 4. The input device 45 is, for example, a keyboard and a computer mouse to input information to the control device 4. The communications device 42 performs communications between the servo motor 51 and the measuring device 52.

The control device 4 further includes a detecting unit 46 and a control unit 47 (also referred to as "various functions of the control device 4"). The execution of the program stored in the storage device 43 by the CPU 41 achieves the various functions of the control device 4.

When the detecting unit 46 receives the cutoff signal, the detecting unit 46 detects an abnormality in the power transmission device 2. The measuring device 52 may transmit the cutoff signal to the control device 4. Alternatively, a user of the power feeding system 100 may transmit the cutoff signal to the control device 4 via the input device 45.

Based on a detection result by the detecting unit 46, the control unit 47 turns the turning coil 26 in the A1 direction or the A2 direction such that the relative positional relationship between the power transmission coil 24 and the turning coil 26 is in the first positional relationship or the second positional relationship. For example, if the detecting unit 46 detects an abnormality, the control unit 47 performs a control to cut off the electric power. Alternatively, for example, when the detecting unit 46 does not detect an abnormality, the control unit 47 performs a control to transmit electric power.

===Operations of Power Feeding System===

The following describes the operations of the power feeding system of the present embodiment with reference to Fig. 2, Fig. 4, and Fig. 5.

<When Electric Power is not Transmitted (Fig. 2)>

When the power transmission device 2 does not transmit electric power to the power receiving device 3, the power receiving device 3 is disposed at the second position. This deteriorates the transmission efficiency and enters the power receiving device 3 in a state where the electric power is not transmitted.

<When Electric Power is Transmitted (Fig. 4)>

When the power transmission device 2 transmits electric power to the power receiving device 3, the power receiving device 3 is disposed at the first position. Further, in this case, the control device 4 causes the turning coil 26 to turn such that the relative positional relationship between the power transmission coil 24 and the turning coil 26 is in the first positional relationship. In this case, the impedance of the power transmission circuit 200 changes and, for example, the resonant frequency approximately matches the frequency of the electric power to be transmitted. Therefore, the electric power is transmitted with improved transmission efficiency.

<When Transmitted Electric Power is Cut off (Fig. 5)>

When electric power is cut off while the power transmission device 2 transmits this electric power to the power receiving device 3, the control device 4 causes the turning coil 26 to turn such that the relative positional relationship between the power transmission coil 24 and the turning coil 26 is in the first positional relationship. In this case, the impedance of the power transmission circuit 200 changes and, for example, the resonant frequency is shifted from the frequency of the electric power to be transmitted. This shift of the resonant frequency sets, for example, the transmission efficiency approximately 0. Therefore, the transmission efficiency is deteriorated, and the transmission of the electric power is cut off. An amount of the above-described shifting of the resonant frequency is determined by the above-described settings of the power transmission device 2 and the power receiving device 3.

As described above, the power transmission device 2 includes the power transmission circuit 200, the turning coil 26 (a third coil), the servo motor 51, and the control device 4. The power transmission circuit 200 includes the power transmission coil 24 (a second coil) to transmit electric power to the power receiving coil 34 (a first coil) of the power receiving device 3. The turning coil 26 is magnetically coupled with the power transmission coil 24. The control device 4 and the servo motor 51 (a turning device) turns the turning coil 26 around the turning shaft 262, which intersects with the winding shaft 241 of the power transmission coil 24, to change the impedance of the power transmission circuit 200 such that the electric power is cut off or supplied from the power transmission coil 24 to the power receiving coil 34. Accordingly, the electric power supplied from the power transmission device 2 to the power receiving device 3 can be cut off or transmitted. This ensures preventing the power transmission device 2 from being damaged by supplying a current exceeding a rated current (also referred to as "an overcurrent") to the power transmission circuit 200. This ensures improving safety of the power feeding system 100. Alternatively, for example, this eliminates the need for disposing a breaker or a similar unit at the power transmission circuit 200. Therefore, this ensures preventing the following situation. A current exceeding the rated current of the breaker is supplied to the power transmission circuit 200, resulting in a breakdown of this breaker causing a failure in cutting off the overcurrent, and therefore the overcurrent would be supplied to the power transmission circuit 200.

The turning coil 26 has a shape whose outer diameter is smaller than an inner diameter of the power transmission coil 24. The turning coil 26 is disposed inside the power transmission coil 24. This ensures providing a compact power transmission device 2.

The servo motor 51 and the control device 4 turns the turning coil 26 about the turning shaft 262, which passes through the turning coil 26. Therefore, the turning of the turning coil 26 can ensure a decreased area in which the turning coil 26 moves. Accordingly, the power transmission device 2 can be configured to be further compact.

The servo motor 51 and the control device 4 turns the turning coil 26 so as to switch the state from one state to the other state between a first state and a second state. In the first state, the winding shaft 241 and the winding shaft 261 are approximately parallel. In the second state, the winding shaft 241 and the winding shaft 261 are approximately orthogonal. Accordingly, expanding the variation width of the impedance of the power transmission circuit 200 by the turning of the turning coil 26 ensures to reliably transmit or cut off the electric power supplied from the power transmission device 2 to the power receiving device 3.

The embodiments are intended for easy understanding of the present invention and are not in any way to be construed as limiting the present invention. The present invention may be modified and improved without departing from the scope of the invention, and equivalents thereof are also encompassed by the invention.

The above embodiment describes that the turning coil 26 is disposed inside the power transmission coil 24. However, this should not be construed in a limiting sense. For example, the turning coil 26 may be disposed outside the power transmission coil 24.

The above embodiment describes that the winding shaft 261 is orthogonal to the turning shaft 262. However, this should not be construed in a limiting sense. For example, it is only necessary that the winding shaft 261 intersects with the turning shaft 262 such that an angle formed by the winding shaft 261 and the turning shaft 262 is, for example, approximately 80 degrees or approximately 70 degrees.

The above embodiment describes the turning of the turning coil 26. However, this should not be construed in a limiting sense. For example, the power transmission coil 24 may be turned about the turning shaft 262. Both the power transmission coil 24 and the turning coil 26 may be turned.

The above embodiment describes that the turning shaft 262 passes through the turning coil 26. However, this should not be construed in a limiting sense. For example, the turning shaft 262 may be away from the turning coil 26; therefore, the turning shaft 262 may not pass through the turning coil 26.

The above embodiment describes that the turning coil 26 is turned by approximately 90 degrees. However, this should not be construed in a limiting sense. For example, to transmit or cut off electric power, the turning coil 26 may be turned by predetermined angles other than approximately 90 degrees.

The above embodiment describes that the turning coil 24 is disposed at the power transmission device 2. However, this should not be construed in a limiting sense. For example, the turning coil with a configuration similar to the turning coil 24 may be disposed inside the power receiving coil 34 of the power receiving device 3 so that the turning of this turning coil may change the impedance of the power receiving circuit 300.

The above embodiment describes that the power transmission device 2 and the power receiving device 3 are configured such that electric power is transmitted when the relative positional relationship between the power transmission coil 24 and the turning coil 26 is in the first positional relationship and electric power is not transmitted when the relative positional relationship between the power transmission coil 24 and the turning coil 26 is in the second positional relationship. However, this should not be construed in a limiting sense. For example, the power transmission device 2 and the power receiving device 3 may be configured such that electric power is transmitted when the relative positional relationship between the power transmission coil 24 and the turning coil 26 is in the second positional relationship and electric power is not transmitted when the relative positional relationship between the power transmission coil 24 and the turning coil 26 is in the first positional relationship. In this case, to transmit electric power, the control device 4 causes the turning coil 26 to turn such that the relative positional relationship between the power transmission coil 24 and the turning coil 26 is in the second positional relationship. To cut off the electric power, the control device 4 causes the turning coil 26 to turn such that the relative positional relationship between the power transmission coil 24 and the turning coil 26 is in the first positional relationship.

[Reference Signs List]

| | |
|---|---|
| 2 | power transmission device |
| 3 | power receiving device |
| 4 | control device |
| 24 | power transmission coil |
| 36 | turning coil |
| 31 | load |
| 34 | power receiving coil |
| 51 | servo motor |
| 100 | power feeding system |

**Claims**

1. A power transmission device, comprising:

   a power transmission circuit that includes a second coil, the second coil being configured to supply a first coil of a power receiving device with electric power;
   a third coil that is magnetically coupled with the second coil; and
   a turning device that is configured to cause the third coil to turn about a turning shaft to change an impedance of the power transmission circuit such that the electric power is cut off or supplied, the turning shaft intersecting with a winding shaft of the second coil.

2. The power transmission device according to claim 1, wherein:

   the third coil has a shape whose outer diameter is smaller than an inner diameter of the second coil, and
   the third coil is disposed inside the second coil.

**3.** The power transmission device according to claim 1 or 2, wherein
the turning device causes the third coil to turn about the turning shaft passing through the third coil.

**4.** The power transmission device according to claim 3, wherein
the turning device turns the third coil to switch a state from one state to another state between a first state and a second state, the winding shaft of the second coil and a winding shaft of the third coil being substantially parallel in the first state, the winding shaft of the second coil and the winding shaft of the third coil being substantially orthogonal in the second state.

**5.** A power feeding system, comprising:

a power receiving device that includes a first coil; and
a power transmission device that is configured to supply the first coil with electric power, wherein
the power transmission device includes:

a power transmission circuit that includes a second coil that supplies the first coil with the electric power;
a third coil magnetically coupled with the second coil; and
a first turning device that causes the third coil to turn about a turning shaft to change an impedance of the power transmission circuit such that the electric power is cut off or supplied, the turning shaft intersecting with a winding shaft of the second coil.

**6.** The power feeding system according to claim 5, wherein:

the third coil has a shape whose outer diameter is smaller than an inner diameter of the second coil, and
the third coil is disposed inside the second coil.

**7.** The power feeding system according to claim 5 or 6, wherein
the turning device causes the third coil to turn about the turning shaft passing through the third coil.

**8.** The power feeding system according to claim 7, wherein
the turning device turns the third coil to switch a state from one state to another state between a first state and a second state, the winding shaft of the second coil and a winding shaft of the third coil being substantially parallel in the first state, the winding shaft of the second coil and the winding shaft of the third coil being substantially orthogonal in the second state.

**9.** An impedance adjusting device of an electric circuit, comprising:

a second coil that is magnetically coupled with a first coil disposed in an electric circuit; and
a turning device that causes the second coil to turn about a turning shaft to change the impedance of the electric circuit, the turning shaft intersecting with a winding shaft of the first coil.

**10.** The impedance adjusting device of the electric circuit according to claim 9, wherein:

the second coil has a shape whose outer diameter is smaller than an inner diameter of the first coil, and
the second coil is disposed inside the first coil.

FIG. 1

FIG. 2

FIG. 3

FIG. 4

FIG. 5

FIG. 6

4

CONTROL DEVICE

41
CPU

42
COMMUNICATIONS
DEVICE

43
STORAGE DEVICE

44
DISPLAY DEVICE

45
INPUT DEVICE

FIG. 7

4

CONTROL DEVICE

46

| DETECTING UNIT |

47

| CONTROL UNIT |

FIG. 8

<div align="center">**INTERNATIONAL SEARCH REPORT**</div>

| | International application No. |
|---|---|
| | PCT/JP2013/083134 |

**A. CLASSIFICATION OF SUBJECT MATTER**
*H02J17/00(2006.01)i*

According to International Patent Classification (IPC) or to both national classification and IPC

**B. FIELDS SEARCHED**

Minimum documentation searched (classification system followed by classification symbols)
H02J17/00

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2013/114576 A1  (Fujitsu Ltd.), 08 August 2013 (08.08.2013), paragraphs [0013] to [0026]; fig. 1 to 4 (Family: none) | 1-8 |
| Y | JP 2010-124522 A  (Toyota Central Research and Development Laboratories, Inc., Toyota Motor Corp.), 03 June 2010 (03.06.2010), paragraph [0027]; fig. 10 & US 2010/0123452 A1 | 1-8 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 December, 2013 (27.12.13) | 14 January, 2014 (14.01.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/083134

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2006-523363 A  (Access Business Group International L.L.C.), 12 October 2006 (12.10.2006), paragraphs [0024] to [0026]; fig. 20 to 22 & US 2004/0150934 A1     & EP 1593133 A & KR 10-2005-0099612 A  & CN 1771570 A & TW 200832459 A        & MY 145263 A & HK 1089552 A          & RU 2004134576 A & AT 528970 T           & NZ 534330 A & PL 2106676 T | 9,10 |

Form PCT/ISA/210 (continuation of second sheet) (July 2009)

**EP 3 089 321 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013070590 A